# EUROPÄISCHE PATENTSCHRIFT

(11) **EP 1 878 023 B1**
(45) Veröffentlichungstag und Bekanntmachung des Hinweises auf die Patenterteilung: **06.11.2013**
(21) Anmeldenummer: 06742648.6
(22) Anmeldetag: 22.04.2006
(51) Int. Cl.: G21C 3/332, G21C 3/33

(54) **BRENNELEMENT FÜR EINEN DRUCKWASSERREAKTOR**
FUEL ELEMENT FOR A PRESSURISED WATER REACTOR
ELEMENT COMBUSTIBLE POUR UN REACTEUR A EAU SOUS PRESSION

(30) Priorität: 30.04.2005 DE 102005020292
(43) Veröffentlichungstag der Anmeldung: 16.01.2008
(73) Patentinhaber: AREVA GmbH, 91052 Erlangen (DE)
(72) Erfinder: RUDOLPH, Matthias, 91085 Weisendorf (DE); FUCHS, Hans-Peter, 90409 Nürnberg (DE); FRIEDRICH, Erhard, 90542 Eckental (DE)
(74) Vertreter: Meissner, Bolte & Partner
(86) Internationale Anmeldenummer: PCT/EP2006/003729
(87) Internationale Veröffentlichungsnummer: WO 2006/117090

(56) Entgegenhaltungen:
- EP-B1- 0 664 920
- DE-A1- 2 259 495
- DE-A1- 2 605 594
- DE-A1- 3 632 153
- US-A- 5 133 927
- US-A- 5 147 600

## Beschreibung

Die Erfindung betrifft ein Brennelement für einen Druckwasserreaktor. Ein solches Brennelement umfasst ein Brennstabbündel, wenigstens einen Abstandhalter mit Zellen z.B. quadratische Form, die von wenigsten einem aus einem ersten Material bestehenden Stegabschnitt begrenzt sind und mehreren jeweils eine Zelle durchsetzenden Führungsrohren aus einem zweiten Material. Die Abstandhalter sind an den Führungsrohren axial fixiert. Wenn Abstandhalter und Führungsrohre aus Zirkoniumlegierungen bestehen, ist eine Verbindung durch Schweißen möglich. Wird jedoch eines der in Rede stehenden Bauteile aus Inconel oder Stahl und das andere Bauteil aus einer ZirkoniumLegierung, z.B. Zircaloy gefertigt, scheidet eine Schweißverbindung aus. Problematisch ist weiterhin, dass die genannten Materialien unterschiedliche Wärmeausdehnungskoeffizienten und dementsprechend unterschiedliche Wärmedehnungen aufweisen. Beim Erwärmen eines Brennelementes auf Betriebstemperatur können dadurch Spannungen an Schweiß- und Lötverbindungen entstehen. Formschlüssige Verbindungen neigen dazu, bei Erwärmung des Brennelements nicht mehr genauso fest zu sein wie im kalten Zustand. Bei aus DE 2 259 495 A und DE 26 05 594 bekannten Brennelementen ist die Verbindung zwischen Führungsrohr und Abstandhalter so ausgestaltet, dass sich eine wärmebedingte Relativausdehnung die Festigkeit der genannten Verbindung nicht schwächt. Dies wird dadurch erreicht, dass am Führungsrohr erste und zweite Vorsprünge mittel- oder unmittelbar fixiert sind, wobei ein erster Vorsprung an einer ersten Axialposition und ein zweiter Vorsprung an einer zweiten Axialposition angeordnet ist und die Vorsprünge jeweils in ein einen Stegabschnitt durchbrechendes Fenster eingreifen.

Davon ausgehend ist es die Aufgabe der Erfindung, ein Brennelement für einen Druckwasserreaktor vorzuschlagen, bei dem aus unterschiedliche Wärmedehnungen aufweisenden Materialien bestehende Abstandhalter und Führungsrohre auf eine alternative Weise miteinander verbunden sind, und zwar insbesondere so, dass eine Materialverformung im Bereich der Fenster zumindest verringert ist.

Diese Aufgabe wird nach Anspruch 1 und 9 durch eine Verbindung zwischen Führungsrohr und Abstandhalter gelöst, bei der im Falle einer größeren Wärmedehnung der Führungsrohre die einander abgewandten und im Falle einer größeren Wärmedehnung eines Abstandhalters bzw. eines dessen Zellen bildenden Stegabschnitts die einander zugewandten Seiten der Vorsprünge jeweils mit einem Anschlagbereich eines Fensters zusammenwirken. Dadurch ist zunächst gewährleistet, dass bei einer Erwärmungsbedingten Relativbewegung zwischen Abstandhalter und Führungsrohren die mechanische Verbindung zwischen den genannten Teilen sich nicht lockert, sondern im Gegenteil fester wird, indem nämlich die Vorsprünge fester auf die jeweiligen Anschlagbereiche der Fenster gedrückt werden. Es ist also nicht erforderlich, bereits im Montagezustand, also bei Raumtemperatur, die spätere Endfestigkeit im Betriebszustand zu erreichen. Ein nach der Montage zwischen Vorsprung und Anschlagbereich des Fensters vorhandenes geringes Spiel verschwindet nämlich spätestens bei erreichen der Betriebstemperatur. Durch die Relativbewegung zwischen Abstandhalter und Führungsrohren beim Erwärmen des Brennelementes kann es zu einer Verformung des Anschlagbereiches eines Fensters kommen. Die Verformung kann aber durch ein bei Raumtemperatur vorhandenes Spiel zwischen den Vorsprüngen und den Anschlagbereichen gering gehalten werden. Eine stärkere Materialverformung im Bereich eines Fensters wird dadurch verringert oder ganz verhindert, dass ein Anschlagbereich eines Fensters zumindest eine schräg zur Längsrichtung des Abstandhalters bzw. eines Führungsrohres verlaufende seitliche Schrägkante aufweist, die mit einem Vorsprung eine Schubkeilverbindung bildet. Diese Art der Verbindung wird mit zunehmender Relativbewegung zwischen Abstandhalter und Führungsrohren aufgrund der Keilwirkung mit zunehmender Erwärmung fester. Durch das Ausmaß der Schrägstellung der Schrägkanten kann eine Anpassung an mehr oder weniger stark ausgeprägte Unterschiede im Wärmedehnungsverhalten der miteinander kombinierten Materialien vorgenommen werden. Der Verformung eines Stegabschnitts im Fensterrandbereich kann auch dadurch entgegengewirkt werden, dass ein Vorsprung mit einer mit dem Schrägbereich zusammenwirkenden Schrägfläche ausgestaltet ist. Dadurch wird die gegenseitige Anlagefläche vergrößert und dementsprechend die auf eine Schrägkante einwirkenden Kräfte verteilt. Die dadurch erreichte geringere Flächenpressung bewirkt eine entsprechend geringere Verformung eines Stegabschnitts im Bereich der Schrägkante.

Bei einer weiteren bevorzugten Ausgestaltung ist vorgesehen, dass die genannte Schrägfläche eines Vorsprunges zusätzlich eine Schrägstellung in Radialrichtung aufweist und die Schrägkante eines Fensters in Umfangsrichtung zumindest teilweise hintergreift, wobei bei einer Relativbewegung zwischen Stegabschnitt und Führungsrohr der Stegabschnitt mit einer radial nach innen wirkenden Kraftkomponente beaufschlagt wird. Auf dieses Weise wird ein Stegabschnitt bei einer Relativbewegung zwischen Abstandhalter und Führungsrohr auf grund der genannten Kraftbeaufschlagung gegen die Umfangsfläche des Führungsrohres gedrückt. Außerdem ist verhindert, dass sich ein Stegabschnitt unter Überwindung des axial wirksamen Hinterschnitts zwischen Vorsprung und Fenster radial nach außen wölbt.

Prinzipiell ist es denkbar, die Vorsprünge direkt am Führungsrohr vorzusehen, diese etwa mit Hilfe eines Dornwerkzeuges aus der Umfangsfläche radial heraus zu drücken. Bei einer bevorzugten Ausgestaltung ist jedoch vorgesehen, dass die Vorsprünge nicht unmittelbar mit dem Führungsrohr verbunden sind, sondern von einer oberen und unteren Hülse getragen werden, welche über ein Führungsrohr geschoben sind und dieses im Bereich eines Abstandhalters axial fixiert umfassen. Die Fixierung der Hülse am Führungsrohr erfolgt vorzugsweise durch eine Verschweißung, was voraussetzt, dass Hülsen und Führungsrohre aus einem miteinander verschweißbaren Material, beispielsweise beide aus rostfreiem Stahl bestehen. Durch die Vorsprünge tragenden Hülsen ist die Montage erleichtert. Die Hülsen werden zunächst ober- und unterseits an einem Abstandhalter fixiert, in dem sie in eine Zelle so weit eingesteckt werden, bis die Vorsprünge in die Fenster der Stegabschnitte einrasten. Anschließend wird ein Führungsrohr durch die am Abstandhalter fixierten Hülsen hindurchgesteckt. Da die Vorsprünge ein Fenster mit axial wirksamen Hinterschnitt durchgreifen sollen, ist zwangsläufig die Schlüsselweite zweier diametral gegenüberliegender Vorsprünge größer als die lichte Weite einer z.B. quadratischen Abstandhalterzelle. Um das Einführen einer Hülse in eine Zelle zu ermöglichen, müssten deshalb die Stegabschnitte zunächst radial nach außen aufgeweitet werden. Bei einer bevorzugten Ausgestaltung ist nun vorgesehen, dass die Vorsprünge nicht direkt am Außenumfang der Hülse sondern an der Außenseite von Armen angeordnet sind, welche sich von der dem Abstandhalter zugewandten Stirnseite einer Hülse axial wegerstrecken. Bei der Montage können die Arme radial nach innen gedrückt werden, so dass die Hülse mit ihren Armen voran in eine Zelle eingeführt werden kann. Wenn die Vorsprünge die Fenster erreicht haben, federn die Arme radial nach außen, wobei die Vorsprünge die Fenster hintergreifen.

Bei einer weiteren bevorzugten Ausgestaltung ist vorgesehen, das ein Abstandhalter rechteckige, von vier Stegabschnitten gebildete Zellen aufweist und dass an einer Hülse vier jeweils mittig zu einem Stegabschnitt ausgerichtete Arme vorhanden sind, wobei die Stegabschnitte einen sich von ihrem oberen und einen sich von ihren unteren Rand axial wegerstreckenden radial erweiterten Aufnahmebereich aufweisen, in den sich der ihm zugeordnete Arm axial und radial hinein erstreckt und mit seinem Vorsprung in ein Fester eingreift.

Bei einer anderen bevorzugten Ausgestaltung ist ebenfalls ein Abstandhalter mit rechteckigen, von vier Stegabschnitten gebildeten Zellen vorhanden. Die Hülse ist jedoch so angeordnet, dass ihre vier Arme jeweils zu den Zelleneckbereichen hin ausgerichtet sind. Im Zelleneckbereich eines jeden Stegabschnittes ist ein oberes und unters Fenster vorgesehen, wobei der Vorsprung eines Arms gleichzeitig in zwei obere bzw. zwei untere Fenster eingreift. Der Vorteil dieser Ausgestaltung liegt z.B. darin, dass ein Stegabschnitt im Zelleneckbereich stabiler ist als in seinem Mittelabschnitt und dementsprechend den von einem Vorsprung im Betriebszustand ausgeübten Kräften insbesondere ohne größere Verformungen oder Verwerfungen besser Stand hält. Vorteilhaft ist weiterhin, dass der Mittelabschnitt eines Stegabschnittes frei bleibt und dieser Platz etwa zur Anordnung eines zur radialen Abstützung eines Brennstabes dienenden Federelementes dienen kann.

Die Erfindung wird nun unter Bezugnahme auf die beigefügten Zeichnungen näher erläutert. Es zeigen:
- Fig. 1: ein Brennelement eines Druckwasserreaktors in perspektivischer Ansicht,
- Fig. 2: einen Ausschnitt eines ersten Ausführungsbeispiel in perspektivischer Darstellung,
- Fig. 2A: eine Abwandlung des Ausführungsbeispiels von Fig. 2,

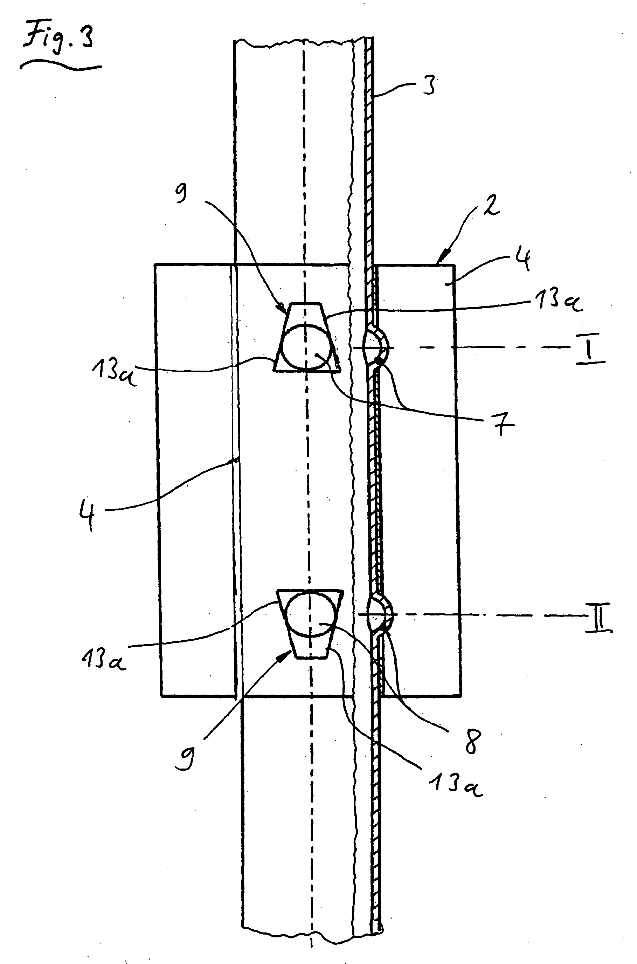

- Fig. 3: eine teilweise aufgebrochene Draufsicht in Richtung des Pfeiles III in Fig. 2,
- Fig. 4: einen Ausschnitt eines zweiten Ausführungsbeispiels in perspektivischer Darstellung,

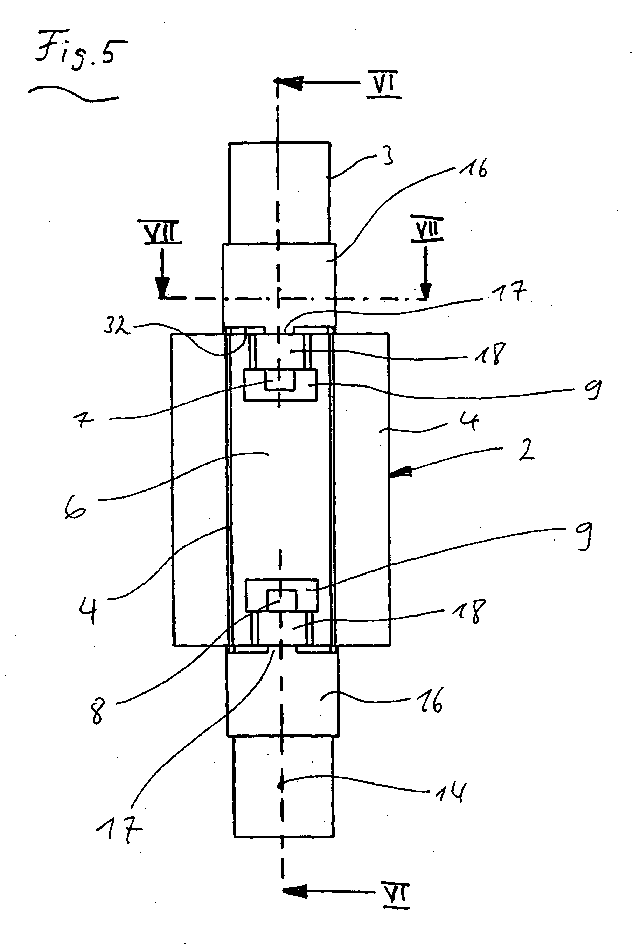

- Fig. 5: eine Draufsicht in Richtung des Pfeils V in Fig. 4,
- Fig. 6: einen Längsschnitt entsprechend der Linie VI-VI in Fig. 5,

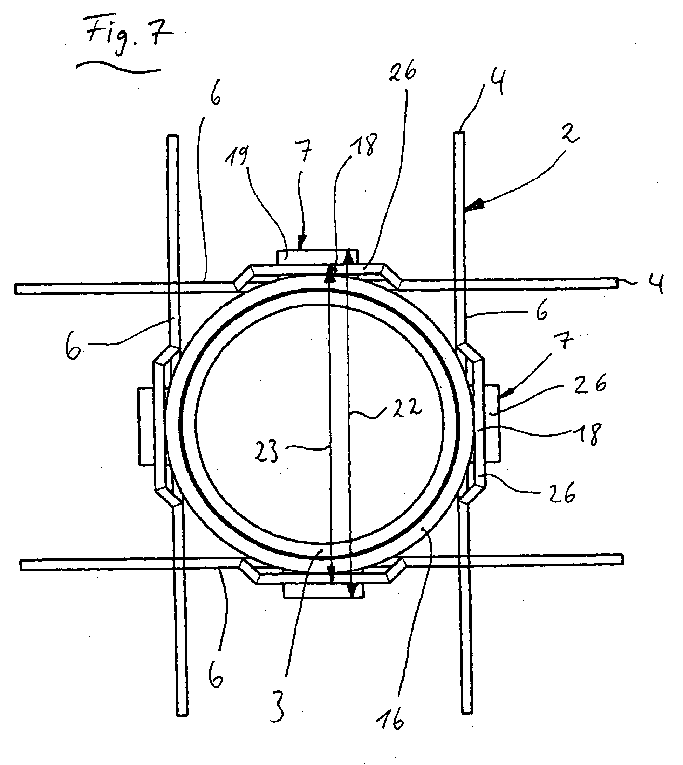

- Fig. 7: einen Querschnitt entsprechend der Linie VII-VII in Fig. 5,
- Fig. 8: einen Ausschnitt eines dritten Ausführungsbeispieles in perspektivischer Darstellung,
- Fig. 9: eine Hülse in perspektivischer Darstellung,
- Fig. 10: die Hülse von Fig. 9 in einer zweiten perspektivischen Darstellung,
- Fig. 11: eine Seitenansicht der Hülse von Fig. 9,
- Fig. 12: einen Querschnitt entsprechend der Linie XII-XII in Fig. 11,
- Fig. 13: einen Querschnitt entsprechend der Linie XIII-XIII in Fig. 11

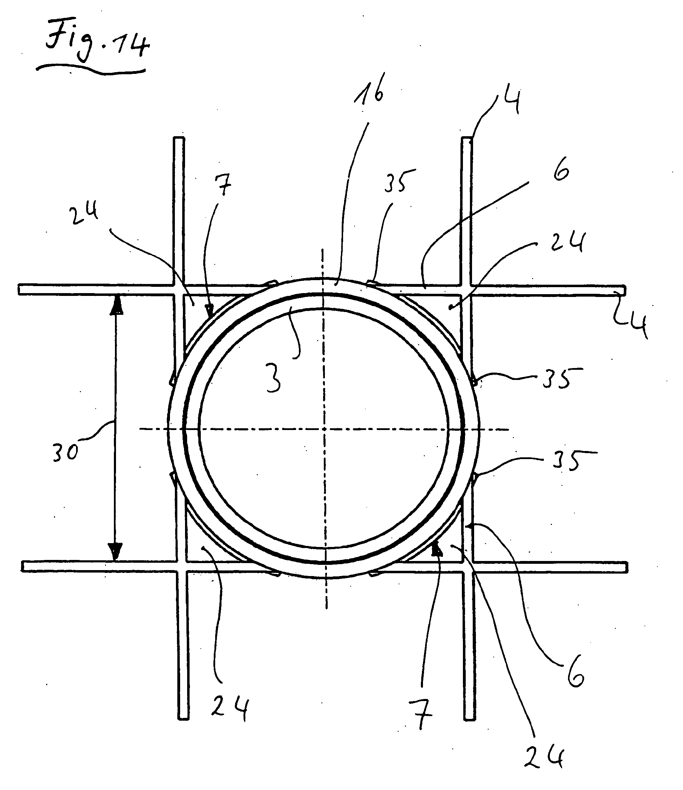

- Fig. 14: einen Querschnitt entsprechend der Linie XIV-XIV in Fig. 8.

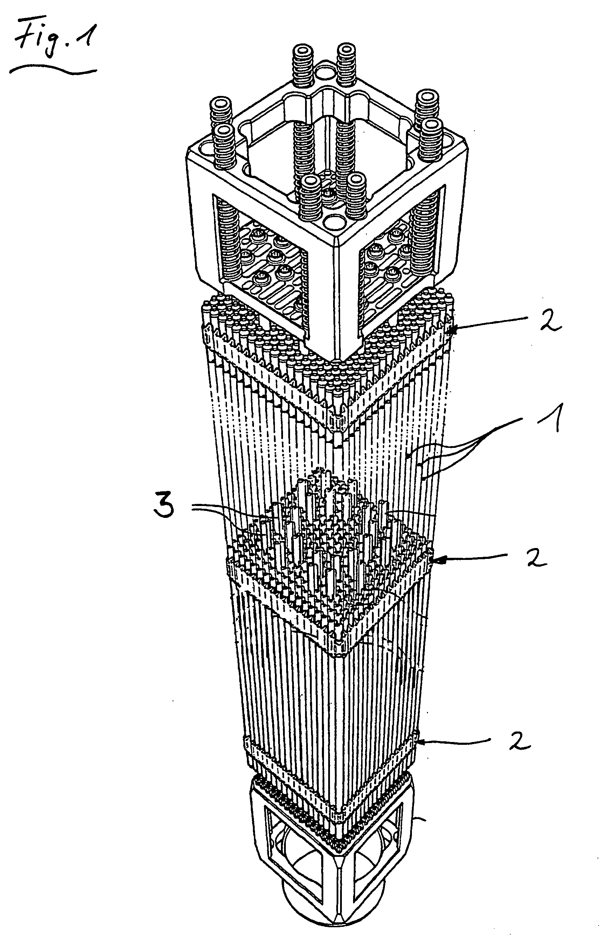

Ein Brennelement eines Druckwasserreaktors, dargestellt in Fig. 1, umfasst ein Bündel einer Vielzahl von Brennstäben 1, welche von mehreren Abstandhaltern 2 lateral gehalten sind.

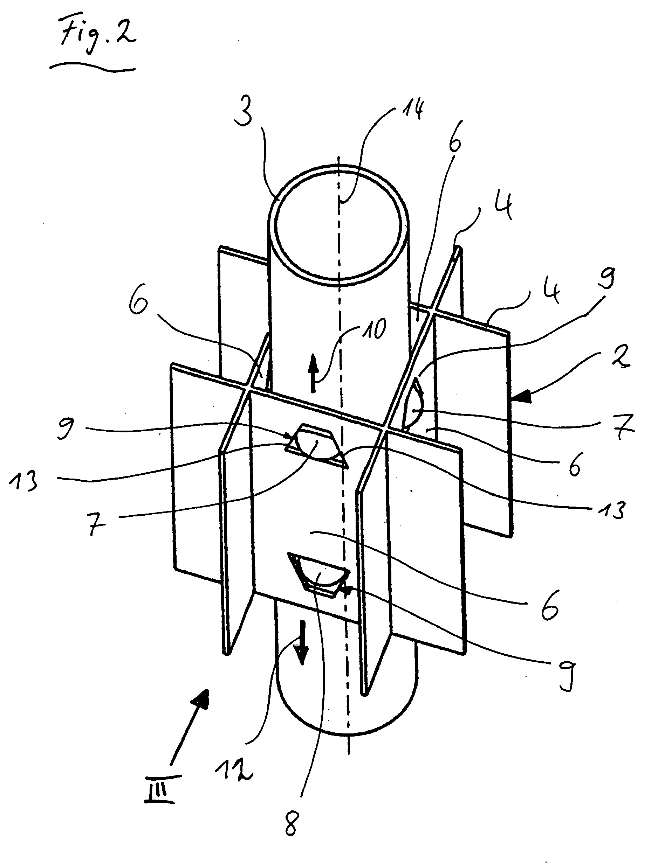

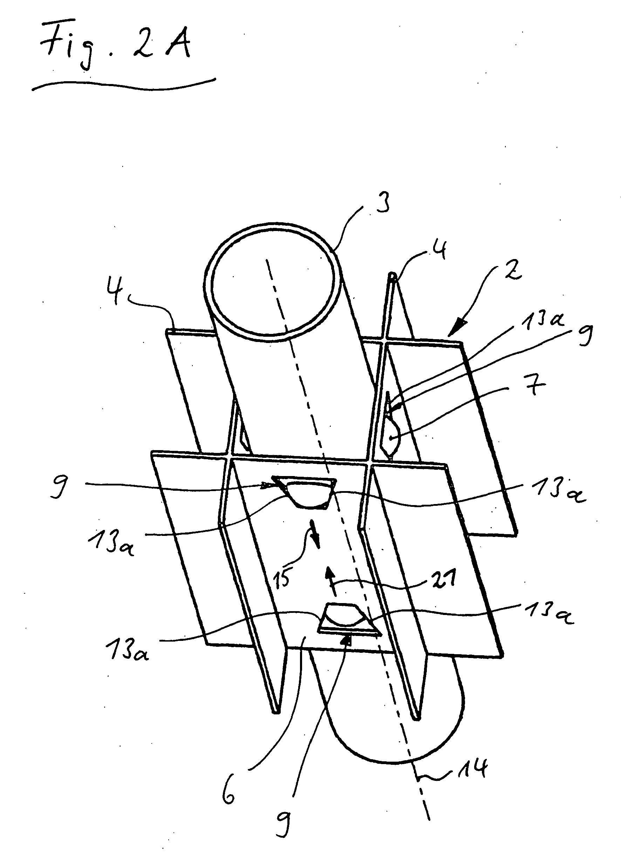

Das Brennelement 1 umfasst weiterhin mehrere Führungsrohre 3. Die Führungsrohre 3 und die Abstandhalter 2 bestehen aus unterschiedlichen, nicht miteinander verschweißbaren Materialien mit unterschiedlichen Wärmedehnungen. Bei den Ausführungsbeispielen nach Fig. 2, 4 und 8 bestehen die Führungsrohre aus einem Material mit einer größeren Wärmedehnung als das Material der Abstandhalter. Die Führungsrohre 3 bestehen aus rostfreiem Stahl oder einer Nickel-Legierung, z.B. Inconel und die Abstandhalter 2 aus einer Zirkoniumlegierung, beispielsweise Zirkaloy. Bei dem Ausführungsbeispiel von Fig. 2A sind die Verhältnisse umgekehrt. Hier weisen die Abstandhalter die größere Wärmedehnung auf, bestehen also etwa aus Inconel oder rostfreiem Stahl. Die Führungsrohre 3 sind dagegen aus Zirkaloy oder dergleichen gefertigt. Bei allen Ausführungsbeispielen setzt sich ein Abstandhalter im wesentlichen aus kreuzweise angeordneten Stegen 4 zusammen, wobei eine Zelle 5 eines Abstandhalters von vier Stegabschnitten 6 gebildet ist. Die Abstandhalter 2 sind in Axialrichtung an den Führungsrohren 3 fixiert. Zu diesem Zweck stehen an einer oberen Axialposition I und an einer unteren Axialposition II jeweils vier erste Vorsprünge 7 bzw. zweite Vorsprünge 8 radial hervor. Die Vorsprünge 7, 8 sind in Umfangsrichtung gleichmäßig beabstandet und sind durch eine radial nach außen gerichtete Prägung der Rohrwand des Führungsrohres 3 gebildet. Die ersten und zweiten Vorsprünge 7, 8 weisen zueinander die gleiche Drehstellung auf und sind etwa noppenförmig ausgebildet. Die Vorsprünge 7, 8 sind innerhalb einer Zelle angeordnet und durchsetzten unter Ausbildung eines axial wirksamen Hinterschnitts die Stegabschnitte 6 durchbrechende Fenster 9.

Bei einer Erwärmung auf Betriebstemperatur dehnt sich das Material der Führungsrohre 3 stärker aus als die Zirkoniumlegierung der Abstandhalter 2. Bezüglich der oberen Axialposition I resultiert daraus eine Relativbewegung der ersten Vorsprünge 7 zu den Stegabschnitten 6 nach oben bzw. in Richtung des Pfeils 10 und bezüglich der unteren Axialposition eine Relativbewegung nach unten bzw. in Richtung des Pfeils 12. Die Vorsprünge 7, 8 werden dabei an einen Anschlagbereich gedrückt, der im vorliegenden Fall von Schrägkanten 13 der Fenster 9 gebildet wird. Die Schrägkanten 13 sind schräg zur Mittellängsachse 14 der Führungsrohre 3 ausgerichtet. Die Schrägkanten 13 der Axialposition I bilden dabei einen in Richtung des Pfeils 12 und jene der Axialposition II einen in Richtung des Pfeils 10 geöffneten spitzen Winkel. Mit zunehmender Relativbewegung des Führungsrohres 3 in Richtung der Pfeile 10 und 12 werden die Vorsprünge 7, 8 mit ihren in Pfeilrichtung 10 bzw. 12 weisenden Seiten gegen die Schrägkanten 13 der Fenster 9 gedrückt. Die Vorsprünge 7, 8 wirken mit den Schrägkanten 13 im Sinne einer Keilschubverbindung zusammen. Mit zunehmender relativer Wärmeausdehnung der Führungsrohre 3 wird ein Vorsprung 7, 8 zusehend in den verengten Bereich der Fenster 9 hinein gepresst. Die Verbindung zwischen Abstandhalter und Führungsrohr 3 wird somit bei Erwärmung fester.

Das Ausführungsbeispiel von Fig. 2A unterscheidet sich von jenem gemäß Fig. 2 dadurch, dass das Material des Führungsrohrs eine geringere Wärmeausdehnung aufweist als das Material des Abstandhalters. Das Führungsrohr 3 besteht z.B. aus Inconel oder rostfreiem Stahl, der Abstandhalter dagegen aus einer Zirkoniumlegierung, beispielsweise Zirkaloy. Bei der Erwärmung auf Betriebstemperatur sind die Ausdehnungsverhältnisse umgekehrt. Die Vorsprünge 7 der oberen Axialposition I führen eine Relativbewegung zum Abstandhalter 3 nach unten bzw. in Richtung des Pfeiles 15 und die Vorsprünge 8 der unteren Axialposition II nach oben bzw. in Richtung des Pfeils 21 aus. Mit der Mittellängsachse 14 der Führungsrohre 3 bilden die Schrägkanten 13a der oberen Fenster 9 bilden einen nach oben bzw. in Richtung des Pfeils 21 und die Seitenkanten 13a der unteren Fenster 9 einen nach unten bzw. in Richtung des Pfeiles 15 geöffnetem spitzen Winkel. Eine unterschiedliche Wärmeausdehnung zwischen Führungsrohr und Abstandhalter 2 bewirkt somit, dass die Fenster 9 mit ihren beiden Schrägkanten 13a gegen die Vorsprünge 7, 8 gedrückt werden.

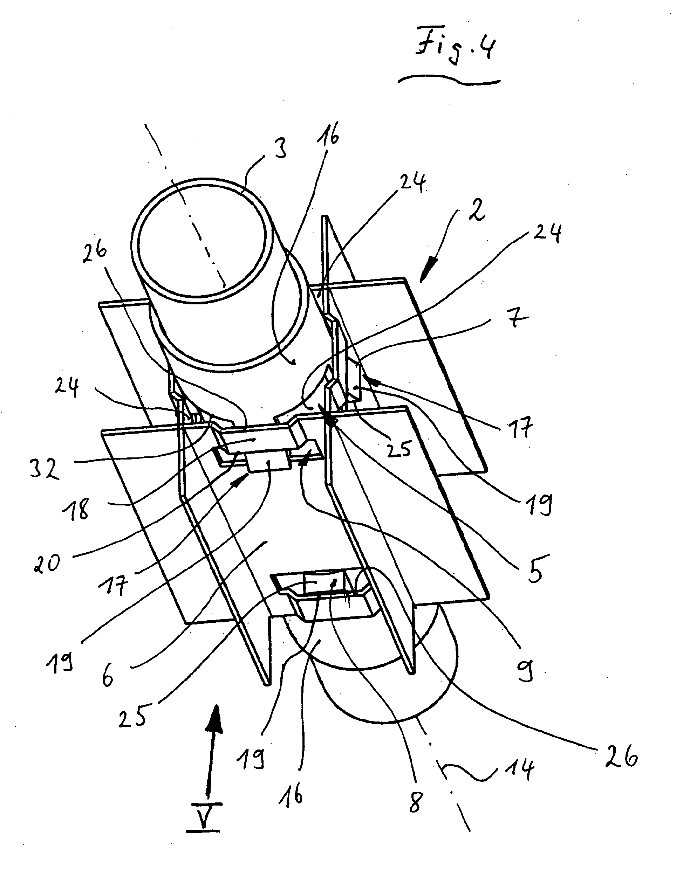

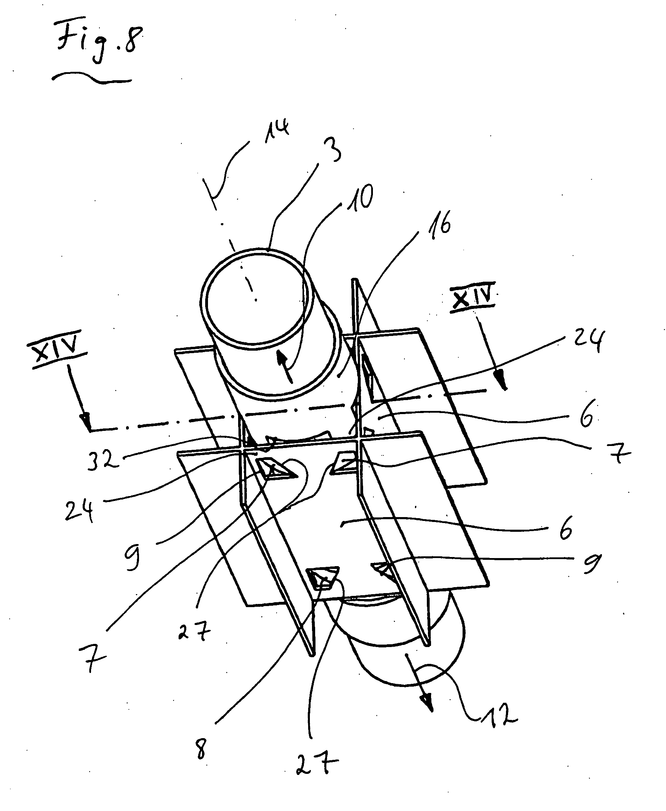

Bei den Ausführungsbeispielen von Fig. 4 und 8 sind die ersten und zweiten Vorsprünge 7, 8 mittelbar mit dem Führungsrohr 3 verbunden. In dem sich oberseits und unterseits an einen Abstandhalter 2 anschließenden Bereich ist das Führungsohr jeweils von einer Hülse 16 axial fixiert und im wesentlichen spielfrei umfasst. Die Hülsen 16 sind am Führungsohr 3 durch eine Verschweißung fixiert und bestehen beispielsweise ebenfalls aus Inconel oder rostfreiem Stahl bzw. aus einem mit diesen Materialien verschweißbaren Material. An die dem Abstandhalter 2 zugewandte Stirnseite 32 der Hülsen 16 sind Arme 17 angeformt, die sich in Axialrichtung weg erstrecken. Die Arme 17 sind aus der Hülsenwand freigeschnitten und tragen an ihrem Freiende die Vorsprünge 7, 8, welche aus ihren Außenseiten radial vorstehen. Die Innenseiten der Arme 17 sind entsprechend der Innenwand der Hülse 16 gekrümmt und liegen dementsprechend im Montagezustand an der Umfangsfläche des Führungsrohres 3 an.

Bei dem Ausführungsbeispiel von Fig. 4 befinden sich die Hülsen 16 in einer derartigen Drehstellung zu einer Zelle 5 des Abstandhalters 2, dass ihre Arme etwa mittig zu einem Stegabschnitt 6 angeordnet sind. Der jeweils einer Hülse 16 zugewandte obere bzw. untere Bereich der Stegabschnitte 6 ist radial nach außen erweitert und bildet einen Aufnahmebereich 18, in dem sich die Arme 17 axial und radial hinein erstrecken. Die Breite des Aufnahmebereichs 18 ist größer als die Breite der Arme 17. Unter- bzw. oberhalb des Aufnahmebereiches 18 sind die Stegabschnitte 6 von einem Fenster 9 durchbrochen. Dieses weist eine rechteckige Querschnittsform und erstreckt sich mit seiner Längsrichtung quer zur Längsrichtung des Brennelementes 1 bzw. quer zur Mittellängsachse 14 der Führungsrohre 3. Die an die Freienden der Arme 17 angeformten Vorsprünge 7, 8 sind im Längsschnitt keilförmig, wobei sie eine von der Umfangsfläche der Führungsrohre 3 wegweisende und sich tangential zu dieser erstreckende Schrägfläche 19 aufweisen. Die Vorsprünge 7, 8 durchgreifen die Fenster 9 und liegen mit ihrer Schrägfläche 19 an der Innenkante 20 der Aufnahmebereiche 18 an. Der Aufnahmebereich 18 bzw. die Innenkante 20 und die Schrägfläche 19 wirken ebenfalls im Sinne einer Keilschubverbindung zusammen. Bei einer wärmebedingten Ausdehnung des Führungsrohres 3 bewegen sich die Vorsprünge 7, 8 bzw. deren Schrägflächen 19 in Richtung der Pfeile 10 bzw. 12. Dabei werden die Schrägflächen 19 auf die Innenkanten 20 aufgeschoben, was mit zunehmender Erwärmung zu einer Verfestigung der Verbindung zwischen Führungsrohr 3 und Abstandhalter 2 führt.

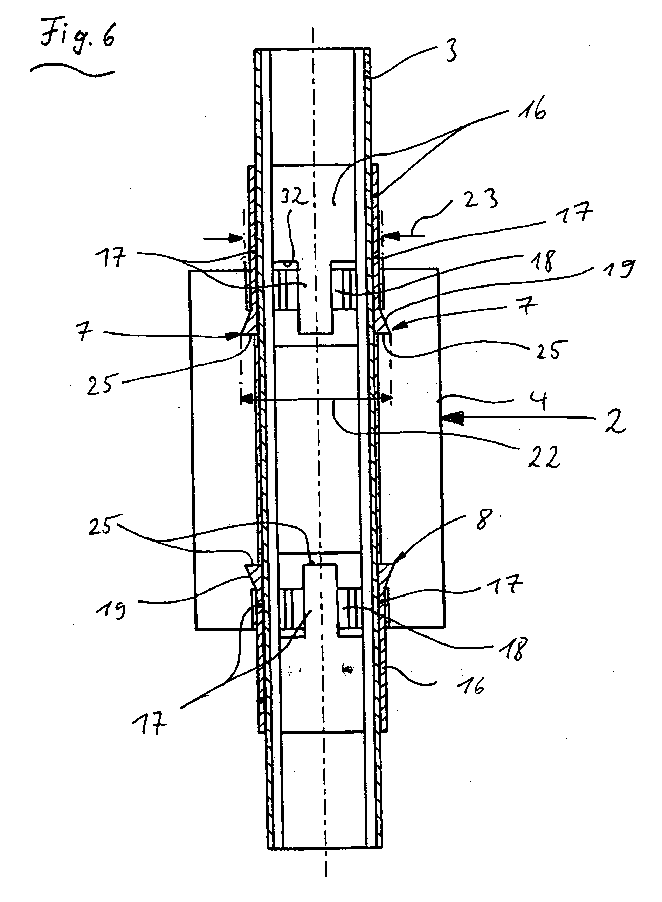

Zur Montage werden zunächst die beiden Hülsen 16 ober- und unterseits auf einen Abstandhalter aufgesteckt. Da die Schlüsselweite 22 (Fig. 6) zweier diametral gegenüberliegenden Vorsprünge größer ist als die Schlüsselweite 23 zweier diametral gegenüberliegender Aufnahmebereiche 18 müssen die Arme 17 vor dem Einstecken einer Hülse 16 in den Abstandhalter 2 radial nach innen gebogen werden. Eine andere Möglichkeit das Einstecken der Hülsen 16 zu ermöglichen besteht darin, die Breite der Arme 17 so zu wählen, dass diese in den Zelleneckbereichen 24 des Abstandhalters 2 Platz finden. Die Hülsen 16 werden somit beim Einstecken in einer um 45° gegenüber ihrer Soll-Drehstellung verdrehten Stellung gehalten. Nachdem die Hülsen 16 ihre axiale Sollposition in etwa erreicht haben, wird die Hülse um 45° gedreht, wobei die Vorsprünge 7, 8 in die Fenster 9 eingreifen. Um dies zu erleichtern ist es zweckmäßig, dass die Fenster 9 in die Zelleckebereiche 24 hinein ragen. Um das Einstecken der Hülsen 16 in einen Abstandhalter 2 zu erleichtern, ist es denkbar, die Stirnseiten 25 der Vorsprünge 7, 8 als Auflaufschrägen auszugestalten, wobei diese mit der Aussenkante eines Stegabschnitts 6 bzw. eines Aufnahmebereiches 18 zusammenwirkt, mit der Folge, dass ein Arm 17 radial nach innen gebogen wird und das Einstecken der Hülse 16 in eine Zelle 5 möglich ist.

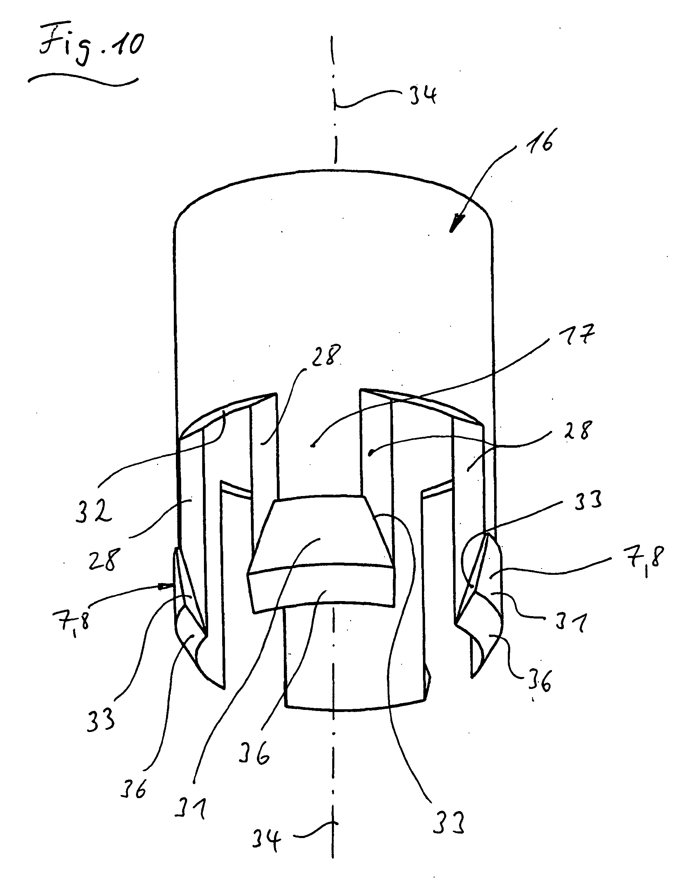

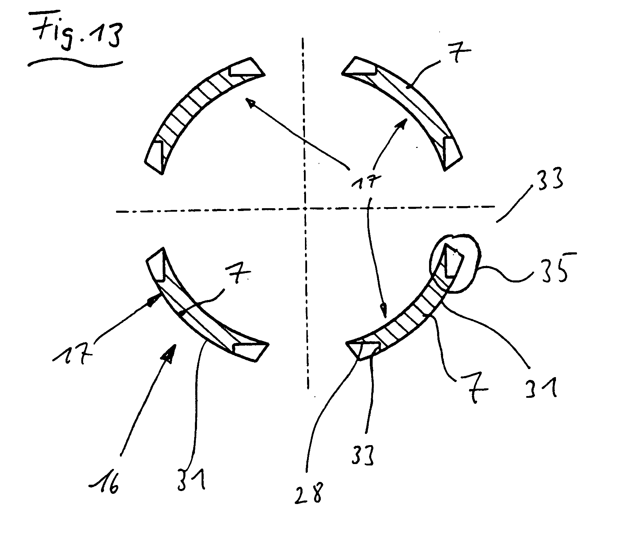

In Fig. 8 bis 13 ist ein Ausführungsbeispiel dargestellt, bei dem eine Fixierung eines Abstandhalters 2 mit quadratischen Zellen 5 an ein Führungsrohr 3 mit Hilfe von Hülsen 16 erfolgt, an deren den Abstandhalter 2 zugewandten Stirnseite 32 Arme 17 axial abstehen. Auch hier sind die Arme 17 aus der Hülsenwand freigeschnitten und tragen an ihrem Freiende außenseitig einen Vorsprung 7 bzw. 8. Im Montagezustand erstrecken sich die Arme 17 in die Zelleneckbereiche 24 des Abstandhalters 2 hinein. In jedem Zelleneckbereich 24 eines Stegabschnittes 6 ist an der oberen Axialposition I und an der unteren Axialposition II jeweils ein Fenster 9 angeordnet. Insgesamt ist ein Stegabschnitt 6 somit von vier Fenstern 9 durchbrochen. Der mit den Vorsprüngen 7, 8 zusammenwirkende Anschlagbereich der Fenster 9 wird durch deren Innenkanten gebildet, welche als Schrägkanten 27 ausgebildet sind. Eine Schrägkante 27 bildet mit der Mittellängsachse 14 eines Führungsrohres 3 einen sich nach oben (Pfeil 10) oder nach unten (Pfeil 12) öffnenden spitzen Winkel. Der Vorsprung 7, 8 eines Armes 17 greift gleichzeitig in zwei obere bzw. zwei untere Fenster eines Zelleneckbereiches 24 ein.

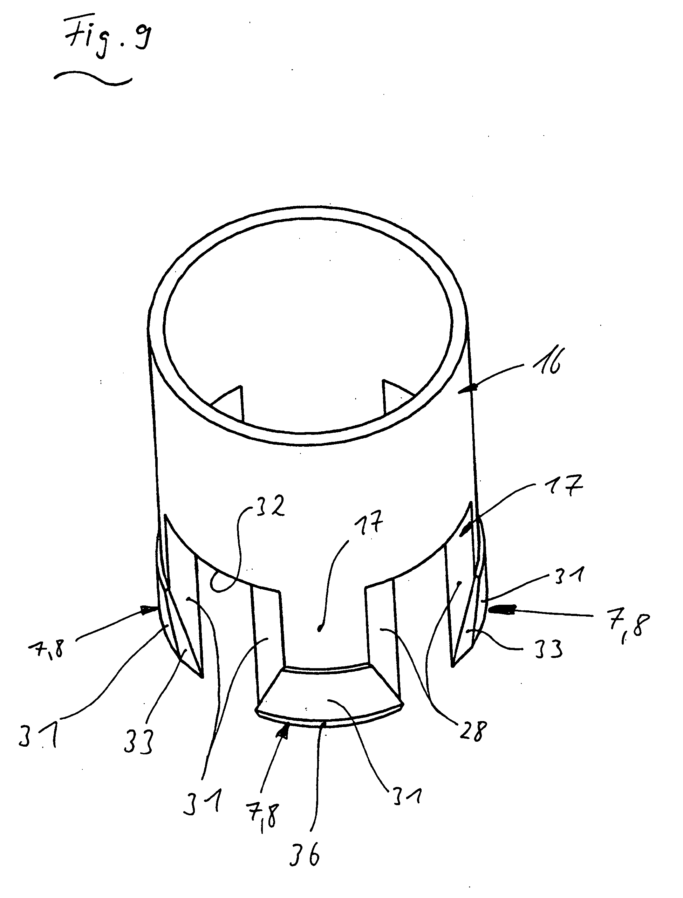

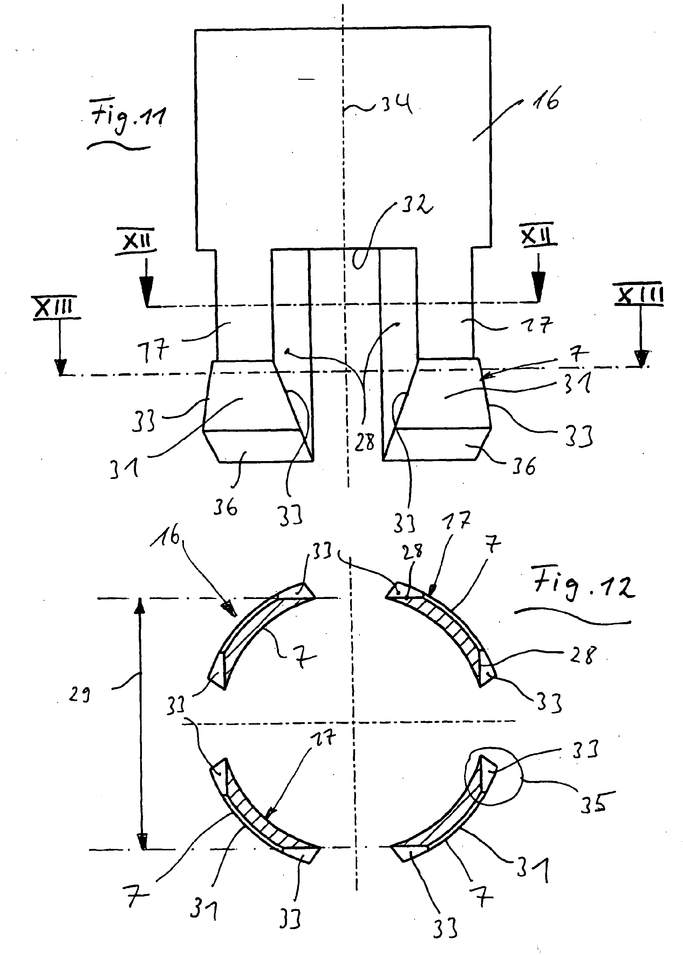

Die nähere Gestaltung einer Hülse 16 und insbesondere der Vorsprünge 7, 8 ist am besten Fig. 9 bis 12 zu entnehmen. Die Seitenflächen 28 der Arme 17 erstrecken sich nicht in Radialsondern in Tangentialrichtung in Bezug auf die Umfangsfläche der Hülse 16. Wie insbesondere Fig. 12 zu entnehmen ist, bilden die Seitenflächen 28 insgesamt einen Vierkant dessen Schlüsselweite 29 geringfügig kleiner ist als die lichte Weite 30 einer Zelle 4. Eine Hülse 16 kann maximal so weit in einen Abstandhalter 2 eingesteckt werden, bis ihre die Arme 17 tragende Stirnseite 32 auf den Stegen 4 bzw. den Stegabschnitten 6 aufsitzt. Die Vorsprünge 7, 8 sind im wesentlichen ringwulstartige, radial von der Außenseite der Arme 17 abstehende Verdickungen. Die Außenseite 31 der Vorsprünge 7, 8 ist Teil einer Zylinderfläche, welche die Umfangsfläche der Hülsen 16 koaxial umfasst. Die Seitenflächen der Vorsprünge 7, 8 sind als Schrägflächen 33 ausgebildet, welche mit der Mittellängsachse 34 einer Hülse 16 bzw. der Mittellängsachse 14 eines Führungsohres 3 einen sich nach oben (Pfeil 10) bzw. nach unten (Pfeil 12) öffnenden spitzen Winkel bilden. Im Montagzustand durchgreifen die Vorsprünge 7, 8 mit ihren Seitenbereichen 35 zwei an einem Zelleneckbereich 24 benachbarte Fenster 9. Dabei wirken die Schrägflächen 33 der Vorsprünge 7, 8 mit den Schrägkanten 27 der Fenster 9 im Sinne einer Keilschubverbindung zusammen. Damit die Arme 17 mit den Vorsprüngen 7, 8 in die Zelleneckbereiche 24 hinein passen, dürfen die Vorsprünge 7, 8 nicht allzu weit von der Außenumfangsfläche von der Hülse 16 abstehen. Die radiale Ausdehnung der Schrägflächen 33 ist daher relativ gering, so dass die Gefahr besteht, dass bei einer Erwärmungsbedingten Ausdehnung der Führungsrohre 3 eine Schrägfläche 33 außer Eingriff mit der Schrägkante 27 gelangt. Um dies zu verhindern, sind die Schrägflächen 33 in einer Radialebene gesehen so ausgerichtet, dass bei einer Relativbewegung zwischen Führungsrohr 3 und Stegabschnitt 6 in Pfeilrichtung 10 bzw. 12 ein Vorsprung 7, 8 eine radial nach innen gerichtete Kraftkomponente auf eine Schrägkante 27 ausübt. Die Festigkeit der Verbindung zwischen Führungsrohr 3 und Abstandhalter 2 wird somit im erwärmten Zustand nicht nur in Axialrichtung sondern auch in Radialrichtung gefestigt.

Die Montage erfolgt etwa wie oben bereits beschrieben. Die Hülsen 16 werden ober- bzw. unterseits in eine Zelle eingesteckt, wobei die Arme 17 zu dem Zelleneckbereichen 24 hin ausgerichtet sind. Um das radiale nach innen gerichtete Verbiegen der Arme 17 zu erleichtern, ist deren Stirnseite als Auflaufschräge 36 ausgebildet.

## Patentansprüche

1. Brennelement für einen Kernreaktor mit einem Brennstabbündel, wenigstens einem Abstandhalter (2) mit Zellen (5), die von wenigstens einem, aus einem ersten Material bestehenden Stegabschnitt (6) umgrenzt sind, und mehreren, jeweils eine Zelle (5) durchsetzenden und daran axial fixierten Führungsrohren (3) aus einem eine vom ersten Material verschiedene Wärmedehnung aufweisenden zweiten Material, wobei zur Verbindung von Führungsrohr (3) und Abstandhalter (2)
- am Führungsrohr (3) erste und zweite Vorsprünge (7,8) mittel- oder unmittelbar fixiert sind, wobei die ersten Vorsprünge (7) an einer ersten Axialposition (I) und die zweiten Vorsprünge (8) an einer zweiten Axialposition (II) angeordnet sind, und
- die Vorsprünge (7,8) jeweils in ein einen Stegabschnitt (6) durchbrechendes Fenster (9) unter Ausbildung eines axial wirksamen Hinterschnitts eingreifen,
**dadurch gekennzeichnet,**
**dass** im Falle einer größeren Wärmedehnung des Führungsrohrs (3) die einander abgewandten und im Falle einer größeren Wärmedehnung eines Stegabschnitts (6) die einander zugewandten Seiten der Vorsprünge (7,8) jeweils mit einem Anschlagbereich der Fenster (9) zusammenwirken, der zumindest eine schräg zur Längsrichtung des Abstandhalters (2) oder des Führungsrohrs (3) verlaufende Schrägkante (13, 17) aufweist, die mit einem Vorsprung (7, 8) eine Schubkeilverbindung bildet.

2. Brennelement nach Anspruch 1,
**dadurch gekennzeichnet,**
**dass** ein Vorsprung (7,8) eine mit der Schrägkante (13, 27) zusammenwirkende Schrägfläche (19,33) aufweist.

3. Brennelement nach Anspruch 2,
**dadurch gekennzeichnet,**
**dass** die Schrägfläche (33) zusätzlich eine Schrägstellung in Radialrichtung aufweist und die Schrägkante (27) in Umfangsrichtung hintergreift, derart, dass bei einer Relativbewegung zwischen Stegabschnitt (6) und Führungsrohr (3) der Stegabschnitt (6) mit einer radial wirkenden Kraftkomponente beaufschlagt wird.

4. Brennelement nach einem der Ansprüche 1 bis 3,
**dadurch gekennzeichnet,**
**dass** das Führungsrohr (3) im Bereich eines Abstandhalters (2) von einer oberen und einer unteren Hülse (16) axial fixiert umfasst ist, wobei die obere Hülse (16) erste Vorsprünge (7) und die untere Hülse zweite Vorsprünge (8) trägt.

5. Brennelement nach Anspruch 4,
**dadurch gekennzeichnet,**
**dass** sich von der dem Abstandhater (2) zugewandten Stirnseite (32) einer Hülse (16) mehrere Arme (17) axial wegerstrecken, wobei die Vorsprünge (7,8) an den Außenseiten der Arme (17) angeordnet sind.

6. Brennelement nach Anspruch 5,
**dadurch gekennzeichnet,**
**dass** die Innenseite der Arme (17) an der Umfangsfläche des Führungsrohres (3) anliegt.

7. Brennelement nach Anspruch 5 oder 6,
**dadurch gekennzeichnet,**
**dass** der Abstandhalter (2) rechteckige, von vier Stegabschnitten (6) gebildete Zellen (5) aufweist und dass an einer Hülse (16) vier jeweils mittig zu einem Stegabschnitt (6) ausgerichtete Arme (17) vorhanden sind, wobei die Stegabschnitte (6) einen sich von ihrem oberen und einen sich von ihrem unteren Rand axial weg erstreckenden radial erweiterten Aufnahmebereich (18) aufweisen, in den sich der ihm zugeordnete Arm (17) axial und radial hinein erstreckt und mit seinem Vorsprung (7,8) in ein Fenster (9) eingreift.

8. Brennelement nach Anspruch 5 oder 6,
**dadurch gekennzeichnet,**
**dass** der Abstandhalter (2) rechteckige, von vier Stegabschnitten (6) gebildete Zellen (5) aufweist und dass an einer Hülse (16) vier jeweils zu den Zelleneckbereichen (24) hin ausgerichtete Arme (17) vorhanden sind, und dass im Zelleneckbereich (24) eines jeden Stegabschnitts (6) ein oberes und ein unteres Fenster (9) vorgesehen sind, wobei der Vorsprung (7,8) eines Arms (17) gleichzeitig in zwei obere bzw. zwei untere Fenster (9) eines Zelleneckbereichs (24) eingreift.

9. Brennelement für einen Kernreaktor mit einem Brennstabbündel, wenigstens einem Abstandhalter (2) mit Zellen (5), die von wenigstens einem, aus einem ersten Material bestehenden Stegabschnitt (6) umgrenzt sind, und mehreren, jeweils eine Zelle (5) durchsetzenden und daran axial fixierten Führungsrohren (3) aus einem eine vom ersten Material verschiedene Wärmedehnung aufweisenden zweiten Material, wobei zur Verbindung von Führungsrohr (3) und Abstandhalter (2)
- am Führungsrohr (3) erste und zweite Vorsprünge (7,8) mittel- oder unmittelbar fixiert sind, wobei die ersten Vorsprünge (7) an einer ersten Axialposition (I) und die zweiten Vorsprünge (8) an einer zweiten Axialposition (II) angeordnet sind, und
- die Vorsprünge (7,8) jeweils in ein einen Stegabschnitt (6) durchbrechendes Fenster (9) unter Ausbildung eines axial wirksamen Hinterschnitts eingreifen,
**dadurch gekennzeichnet,**
- **dass** die Vorsprünge (7,8) im Längsschnitt keilförmig sind, wobei sie eine von der Umfangsfläche des Führungsrohrs (3) wegweisende und sich tangential zu dieser erstreckende Schrägfläche (19) aufweisen,
- **dass** die Vorsprünge (7,8) die Fenster (9) durchgreifen und mit ihrer Schrägfläche (19) an der Innenkante (20) eines Aufnahmebereiches (18) der Stegabschitte (6) anliegen,
- und **dass** des Aufnahmebereichs (18) die Innenkante (20) und die Schrägfläche (19) im Sinne einer Schubkeilverbindung zusammenwirken.

10. Brennelement nach Anspruch 9,
**dadurch gekennzeichnet,**
**dass** das Führungsrohr (3) im Bereich eines Abstandhalters (2) von einer oberen und einer unteren Hülse (16) axial fixiert umfasst ist, wobei die obere Hülse (16) erste Vorsprünge (7) und die untere Hülse zweite Vorsprünge (8) trägt.

11. Brennelement nach Anspruch 10,
**dadurch gekennzeichnet,**
**dass** die Hülsen (16) durch eine Verschweißung am Führungsrohr (3) fixiert sind.

12. Brennelement nach Anspruch 10 oder 11,
**dadurch gekennzeichnet,**
**dass** sich von der dem Abstandhalter (2) zugewandten Stirnseite (32) einer Hülse (16) mehrere Arme (17) axial wegerstrecken, wobei die Vorsprünge (7,8) an den Außenseiten der Arme (17) angeordnet sind.

13. Brennelement nach einem der Ansprüche 10 bis 12,
**dadurch gekennzeichnet,**
**dass** der Aufnahmebereich (18) durch einen radial nach außen erweiterten, der Hülse (16) zugewandten oberen bzw. unteren Bereich der Stegabschnitte (6) gebildet ist, in den sich die Arme (17) axial und radial hinein erstrecken.

14. Brennelement nach einem der Ansprüche 9 bis 13,
**dadurch gekennzeichnet,**
**dass** das Fenster (9) eine rechteckige Querschnittsform aufweist und sich mit seiner Längsrichtung quer zur Längsrichtung des Brennelements (1) bzw. quer zur Mittellängsachse des Führungsrohrs (3) erstreckt.

## Claims

1. Fuel element for a nuclear reactor having a fuel rod bundle, at least one spacer (2) with cells (5) that are defined by at least one web section (6) consisting of a first material, and several guide tubes (3) that each run through a cell (5) and are axially fixed thereto, said guide tubes being made from a second material having a different expansion coefficient from the first material, wherein, for connecting the guide tube (3) and the spacer (2),
- first and second projections (7, 8) are fixed indirectly or directly to the guide tube (3), wherein the first projections (7) are arranged on a first axial position (I) and the second projections (8) are arranged on a second axial position (II), and
- the projections (7, 8) each engage with a window (9), which breaks through a web section (6), forming an undercut that acts axially,
**characterised in that**,
if the guide tube (3) has a greater thermal expansion coefficient, the sides of the projections (7, 8) facing away from each other and, if a web section (6) has a greater thermal expansion coefficient, the sides of the projections (7, 8) that face each other, each interact with a stop region of the window (9), which has at least one slanted edge (13, 17) running at an angle to the longitudinal direction of the spacer (2) or the guide tube (3), which edge forms, with a projection (7, 8), a thrust wedge connection.

2. Fuel element according to claim 1,
**characterised in that**,
a projection (7, 8) has a slanted surface (19, 33) that interacts with the slanted edge (13, 27).

3. Fuel element according to claim 2,
**characterised in that**,
the slanted surface (33) additionally has a slanted position in the radial direction and engages behind the slanted edge (27) in the peripheral direction in such a way that, during a relative movement between the web section (6) and guide tube (3), the web section (6) is charged with a radially-acting force component.

4. Fuel element according to one of claims 1 to 3,
**characterised in that**,
the guide tube (3) is axially fixed by an upper and a lower sleeve (16) in the region of a spacer (2), wherein the upper sleeve (16) bears first projections (7) and the lower sleeve bears second projections (8).

5. Fuel element according to claim 4,
**characterised in that**,
several arms (17) extend axially away from the front face (32) of a sleeve (16) facing the spacer (2), wherein the projections (7, 8) are arranged on the outer faces of the arms (17).

6. Fuel element according to claim 5,
**characterised in that**,
the inner face of the arms (17) abuts on the peripheral surface of the guide tube (3).

7. Fuel element according to claim 5 or 6,
**characterised in that**,
the spacer (2) has rectangular cells (5) formed from four web sections (6) and that four arms (17), each configured in the centre of a web section (6), are present on a sleeve (16), wherein the web sections (6) have a radially expanded receiving region (18) that extends radially away from its upper and lower edge, into which region the arm (17) allocated to it extends axially and radially and engages with a window (9) with its projection (7, 8).

8. Fuel element according to claim 5 or 6,
**characterised in that**,
the spacer (2) has rectangular cells (5) formed from four web sections (6) and that four arms (17), each configured with respect to the cell corner regions (24), are present on a sleeve (16), and that an upper and a lower window (9) are provided in the cell corner region (24) of each web section (6), wherein the projection (7, 8) of an arm (17) engages simultaneously with two upper or two lower windows (9) of a cell corner region (24).

9. Fuel element for a nuclear reactor having a fuel rod bundle, at least one spacer (2) with cells (5) that are defined by at least one web section (6) consisting of a first material, and several guide tubes (3) that each run through a cell (5) and are axially fixed thereto, said guide tubes being made from a second material having a different expansion coefficient from the first material, wherein, for connecting the guide tube (3) and the spacer (2),
- first and second projections (7, 8) are fixed indirectly or directly to the guide tube (3), wherein the first projections (7) are arranged on a first axial position (I) and the second projections (8) are arranged on a second axial position (II), and
- the projections (7, 8) each engage with a window (9) that breaks a web section (6) by forming an undercut that acts axially,
**characterised in that**,
- the projections (7, 8) have a wedge-shaped longitudinal profile, wherein they have a slanted surface (19) that points away from the peripheral surface of the guide tube (3) and extends tangentially towards it,
- the projections (7, 8) clamp down on the window (9) and abut on the inner edge (20) of a receiving region (18) of the web sections (6) with their slanted surface (19),
- and the inner edge (20) of the receiving regions (18) and the slanted surface (19) interact in the manner of a thrust wedge connection.

10. Fuel element according to claim 9,
**characterised in that**,
the guide tube (3) is axially fixed by an upper and a lower sleeve (16) in the region of a spacer (2), wherein the upper sleeve (16) bears first projections (7) and the lower sleeve bears second projections (8).

11. Fuel element according to claim 10,
**characterised in that**,
the sleeves (16) are fixed to the guide tube (3) by welding.

12. Fuel element according to claim 10 or 11,
**characterised in that**,
several arms (17) extend axially away from the front face (32) of a sleeve (16) facing the spacer (2), wherein the projections (7, 8) are arranged on the outer faces of the arms (17).

13. Fuel element according to one of claims 10 to 12,
**characterised in that**,
the receiving region (18) is formed by an upper or lower region of the web sections (6), which region expands radially outwards and faces the sleeve (16), and into which region the arms (17) extend axially and radially.

14. Fuel element according to one of claims 9 to 13,
**characterised in that**,
the window (9) has a rectangular cross-sectional shape and extends in its longitudinal direction transverse to the longitudinal direction of the fuel element (1) or transverse to the central longitudinal axis of the guide tube (3).

## Revendications

1. Elément combustible destiné à un réacteur nucléaire comprenant au moins une grappe combustible, au moins un espaceur (2) avec des cellules (5) délimitées par au moins une entretoise (6) réalisée en un premier matériau, et plusieurs tubes de guidage (3) traversant chacun une cellule (5) et étant fixés axialement sur celle-ci, réalisés en un second matériau présentant une autre dilatation thermique que le premier matériau, pour la liaison entre le tube de guidage (3) et l'espaceur (2)
- des premières et des secondes saillies (7, 8) étant fixées directement ou indirectement au tube de guidage (3), les premières saillies (7) étant disposées dans une première position axiale (I) et les secondes saillies (8) dans une seconde position axiale (II), et
- les saillies (7, 8) s'engrenant respectivement dans une fenêtre (9) traversant une entretoise (6), en formant une contre-dépouille agissant axialement,
**caractérisé en ce qu'**en cas d'une dilatation thermique plus importante du tube de guidage (3) les faces étant détournées l'une de l'autre, et en cas d'une dilatation thermique plus importante d'une entretoise (6) les faces étant tournées l'une vers l'autre des saillies (7, 8) coopèrent respectivement avec une zone de butée des fenêtres (9) qui présente au moins un biseau (13, 17) s'étendant de façon oblique par rapport à l'espaceur (2) ou au tube de guidage (3) qui forme avec une saillie (7, 8) une liaison de coin de serrage.

2. Elément combustible selon la revendication 1,
**caractérisé en ce qu'**une saillie (7, 8) présente une surface oblique (19, 33) qui coopère avec le biseau (13, 27).

3. Elément combustible selon la revendication 2,
**caractérisé en ce que** la surface oblique (33) présente également une position oblique dans la direction radiale et se place derrière le biseau (27) dans la direction circonférentielle, de telle sorte que lors d'un mouvement relatif entre l'entretoise (6) et le tube de guidage (3) l'entretoise (6) soit sollicitée par une composante de force agissant radialement.

4. Elément combustible selon l'une quelconque des revendications 1 à 3,
**caractérisé en ce que** le tube de guidage (3) est fixé axialement dans la zone d'un espaceur (2) par une douille (16) supérieure et inférieure, la douille (16) supérieure portant des premières saillies (7) et la douille inférieure des secondes saillies (8).

5. Elément combustible selon la revendication 4,
**caractérisé en ce que** depuis la face frontale (32) d'une douille (16) tournée vers l'espaceur (2) plusieurs bras (17) s'étendent axialement, les saillies (7, 8) étant disposées sur les faces extérieures des bras (17).

6. Elément combustible selon la revendication 5,
**caractérisé en ce que** la face intérieure des bras (17) est appliquée contre la surface circonférentielle du tube de guidage (3).

7. Elément combustible selon la revendication 5 ou 6,
**caractérisé en ce que** l'espaceur (2) présente des cellules (5) rectangulaires formées par quatre parties d'entretoise (6), et **en ce qu'**une douille (16) présente quatre bras (17) orientés chacun vers le centre d'une entretoise (6), les entretoises (6) présentant des zones de réception (18) s'évasant radialement et s'étendant axialement, l'une depuis son bord supérieur et l'une depuis son bord inférieur, dans lesquelles entre axialement et radialement le bras (17) leur étant associé, qui s'engrène par sa saillie (7, 8) dans une fenêtre (9).

8. Elément combustible selon la revendication 5 ou 6,
**caractérisé en ce que** l'espaceur (2) présente des cellules (5) rectangulaires formées par quatre entretoises (6), et **en ce qu'**une douille (16) présente quatre bras (17) orientés chacun vers les zones angulaires de cellule (24), et **en ce que** dans la zone angulaire de cellule (24) de chaque entretoise (6) sont prévues une fenêtre supérieure et une fenêtre (9) inférieure, la saillie (7, 8) d'un bras (17) s'engrenant en même temps dans deux fenêtres supérieures ou deux fenêtres (9) inférieures d'une zone angulaire de cellule (24).

9. Elément combustible destiné à un réacteur nucléaire comprenant au moins un assemblage combustible, au moins un espaceur (2) avec des cellules (5) délimitées par au moins une entretoise (6) réalisée en un premier matériau, et plusieurs tubes de guidage (3) traversant chacun une cellule (5) et étant fixés axialement sur celle-ci, réalisés en un second matériau présentant une autre dilatation thermique que le premier matériau, pour la liaison entre le tube de guidage (3) et l'espaceur (2)
- des premières et des secondes saillies (7, 8) étant fixées directement ou indirectement au tube de guidage (3), les premières saillies (7) étant disposées dans une première position axiale (I) et les secondes saillies (8) dans une seconde position axiale (II), et
- les saillies (7, 8) s'engrenant respectivement dans une fenêtre (9) traversant une entretoise (6), en formant une contre-dépouille agissant axialement, **caractérisé en ce**
- **qu'**en coupe longitudinale les saillies (7, 8) sont cunéiformes, présentant une surface oblique (19) partant de la surface circonférentielle du tube de guidage (3) et s'étendant tangentiellement pas rapport à celle-ci,
- **que** les saillies (7, 8) traversent les fenêtres (9) et s'appliquent par la surface oblique (19) contre le bord inférieur (20) d'une zone de réception (18) des entretoises (6),
- et **que** le bord inférieur (20) de la zone de réception (18) et la surface oblique (19) coopèrent dans le sens d'une liaison de coin de serrage.

10. Elément combustible selon la revendication 9,
**caractérisé en ce que** le tube de guidage (3) est fixé axialement dans la zone d'un espaceur (2) par une douille (16) supérieure et inférieure, la douille (16) supérieure portant des premières saillies (7) et la douille inférieure des secondes saillies (8).

11. Elément combustible selon la revendication 10,
**caractérisé en ce que** les douilles (16) sont fixées au tube de guidage (3) par un soudage.

12. Elément combustible selon la revendication 10 ou 11,
**Caractérisé en ce que** depuis la face frontale (32) d'une douille (16) tournée vers l'espaceur (2) plusieurs bras (17) s'étendent axialement, les saillies (7, 8) étant disposées sur les faces extérieures des bras (17).

13. Elément combustible selon l'une quelconque des revendications 10 à 12,
**caractérisé en ce que** la zone de réception (18) est formée par des zones supérieure ou inférieure des parties d'entretoise (6) tournées vers la douille (16), dans laquelle entrent les bras (17) axialement et radialement.

14. Elément combustible selon l'une quelconque des revendications 9 à 13,
**caractérisé en ce que** la fenêtre (9) présente une section de forme rectangulaire et s'étend par sa direction longitudinale transversalement par rapport à la direction longitudinale de l'élément combustible (2) ou transversalement à l'axe longitudinal central du tube de guidage (3).
